(19) Europäisches Patentamt
European Patent Office
Office européen des brevets

(11) Veröffentlichungsnummer : **0 131 022**
**B1**

(12) **EUROPÄISCHE PATENTSCHRIFT**

(45) Veröffentlichungstag der Patentschrift : **30.07.86**

(51) Int. Cl.⁴ : **C 09 D 5/44**, C 08 G 59/04, C 08 G 59/62

(21) Anmeldenummer : **84900385.0**

(22) Anmeldetag : **05.01.84**

(86) Internationale Anmeldenummer : **PCT/DE 84/00003**

(87) Internationale Veröffentlichungsnummer : **WO/8402712 (19.07.84 Gazette 84/17)**

(54) **WASSERDISPERGIERBARE BINDEMITTEL FÜR KATIONISCHE ELEKTROTAUCHLACKE UND VERFAHREN ZU IHRER HERSTELLUNG.**

(30) Priorität : **10.01.83 DE 3300545**

(43) Veröffentlichungstag der Anmeldung : **16.01.85 Patentblatt 85/03**

(45) Bekanntmachung des Hinweises auf die Patenterteilung : **30.07.86 Patentblatt 86/31**

(84) Benannte Vertragsstaaten : **AT BE CH DE FR GB LI NL SE**

(56) Entgegenhaltungen :
**EP-A- 0 059 895**
**FR-A- 2 268 059**
**FR-A- 2 338 297**
**GB-A- 1 306 101**

(73) Patentinhaber : **BASF Lacke & Farben Aktiengesellschaft**
**Max-Winkelmann-Strasse 80**
**D-4400 Münster (DE)**

(72) Erfinder : **GEIST, Michael**
**Rubensstr. 251**
**D-4400 Münster (DE)**
Erfinder : **DIEFENBACH, Horst**
**Lerchenhain 8**
**D-4405 Nottuln (DE)**
Erfinder : **DOBBELSTEIN, Arnold**
**Emil-Nolde-Weg 95**
**D-4400 Münster (DE)**

(74) Vertreter : **Habbel, Hans-Georg, Dipl.-Ing. et al**
**Postfach 3429 Am Kanonengraben 11**
**D-4400 Münster (DE)**

**EP 0 131 022 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betriff ein wasserdispergierbares Bindemittel für kationische Elektrotauchlacke, erhalten durch Umsetzung von

A) niedermolekularen, aromatische Gruppen enthaltenden Epoxidharzen mit einem Epoxidäquivalentgewicht unter 375 mit

B) aliphatischen und/oder alizyklischen polyfunktionellen Alkoholen oder Carbonsäuren mit einem zahlenmittleren Molekulargewicht unter 350, weitere Umsetzung des Reaktionsproduktes von (A) und (B) mit

C) einem polyfunktionellen Alkohol mit einem Molekulargewicht über 350 unter Addition an die Expoxidgruppen derart, daß die Umsetzungsprodukte von (A) und (B) einen Anteil an aromatischen Gruppen, berechnet als Phenylengruppe, von 10 bis 45 Gewichts-% enthalten, und weitere Modifizierung des erhaltenen Zwischenprodukts mit

D) primären und/oder sekundären Aminen oder Ammoniumsalzen zur Erzielung der erforderlichen Wasserdispergierbarkeit.

Kationische wasserdispergierbare Kunstharze als Bindemittel für Elektrotauchlacke sind bekannt. So beschreibt z. B. die DE-OS 2 701 002 ein derartiges Harz, das ein Reaktionsprodukt von einem Polyepoxid mit einem Molekulargewicht von mindestens 350, einem sekundären Amin und einem organischen Polyol mit mindestens zwei alkoholischen primären Hydroxylgruppen ist. Die Harze entstehen durch Kettenverlängerung von hochmolekularen Polyepoxiden mit mindestens 2 Epoxidgruppen pro Molekül. Die Kettenverlängerung wird durch ein organisches Polyol erreicht und die Wasserdispergierbarkeit wird durch Anlagerung eines sekundären Amins erzielt.

Dieses und andere bekannte Kunstharze für die kathodische Elektrotauchlackierung werden häufig für Grundierungen eingesetzt, d. h. die mit ihnen beschichteten Gegenstände erhalten eine zusätzliche Decklackschicht. Nachteilig können jedoch mit den bisher bekannten Harzen nur Beschichtungen mit relativ geringer Schichtdicke erreicht werden. So werden in der DE-OS 2 701 002 erreichbare Schichtdicken von nur 11,4 bis 18 µm angegeben. Wenn an eine Lackierung besonders hohe Anforderungen hinsichtlich der Korrosionsbeständigkeit und der Oberflächengüte gestellt werden, wie es z. B. bei der Lackierung von Kraftwagen und anderen hochwertigen Gütern der Fall ist, ist es daher bisher üblich, zwischen der Elektrotauchgrundierung und dem Decklack als zusätzliche Schicht einen sogenannten Füller aufzubringen. Dies ist aufwendig und kostenintensiv. Daher ist es wünschenswert, das Elektrotauchlackierverfahren so zu verbessern, daß bei diesem Verfahren größere Schichtdicken erreicht werden können. Bei dem Versuch, die Schichtdicke zu erhöhen, ergeben sich Probleme daraus, daß bei einer Erhöhung der Abscheidespannung über die Durchbruchspannung hinaus Oberflächenstörungen im Film durch Aufreißen der Schicht auftreten. Die Verlängerung der Beschichtungszeit ergibt ebenfalls eine Steigerung der Schichtdicke, doch läßt sich diese Steigerung nicht beliebig fortführen, denn es besteht normalerweise aufgrund des elektrischen Widerstandes des abgeschiedenen Films eine obere Grenze der Schichtdicke, bei der auch bei noch so langem Beschichten praktisch kein Schichtstärkenzuwachs mehr erreicht wird.

Aus der DE-OS 3 108 073 ist ein wasserdispergierbares Bindemittel für kationische Elektrotauchlacke bekannt, bei dessen Anwendung größere Schichtdicken des abgeschiedenen Films erzielt werden. Wenn auch dieses bekannte Bindemittel Überzüge mit ausgezeichneten Eigenschaften liefert, so stellt sich doch die Aufgabe, durch eine Modifizierung des Bindemittels die Elastizität der resultierenden Überzüge weiter zu verbessern.

Überraschenderweise wurde nun gefunden, daß Überzüge mit verbesserten elastischen Eigenschaften erzielt werden, wenn das verwendete Bindemittel einen Anteil eines linearen Polyetherdiols enthält, das neben einer primären Hydroxylgruppe eine sekundäre Hydroxylgruppe enthält.

Es war nicht naheliegend, ein Diol einzusetzen, das primäre und sekundäre Hydroxylgruppen in Kombination enthält, da der fachmann aufgrund der DE-OS 2 701 002 annehmen mußte, für den in Rede stehenden Einsatz seien ausschließlich Diole mit primären Hydroxylgruppen geeignet. Auf Seite 10 dieser Offenlegungsschrift heißt es, es sei wesentlich, daß die alkoholischen Hydroxylgruppen primär und nicht sekundär oder tertiär sind. Es wird weiter auf die Gefahr der Gelbildung des Harzes hingewiesen, wenn Diole mit sekundären Hydroxylgruppen verwendet werden.

Es ist das Verdienst der vorliegenden Erfindung, dieses Vorurteil durch den Vorschlag überwunden zu haben, ein Diol einzusetzen, das zwigend neben einer primären eine sekundäre Hydroxylgruppe aufweist.

Der Erfindung liegt also die Aufgabe zugrunde, ein Bindemittel für kationische Elektrotauchlacke zu schaffen, bei dessen Verwendung Überzüge mit großer Schichtdicke und gleichzeitig hoher Elastizität erzielt werden.

Diese Aufgabe wird bei einem Bindemittel der eingangs genannten Art erfindungsgemäß dadurch gelöst, daß als Komponente (C) 5 bis 40 Gewichts-%, bezogen auf die Summe der Komponenten (A), (B), (C) und (D), eines linearen Polyalkylenetherdiols eingesetzt worden sind, das im Mittel eine endständige primäre und eine endständige sekundäre Hydroxylgruppe pro Molekül aufweist und der allgemeinen Formel

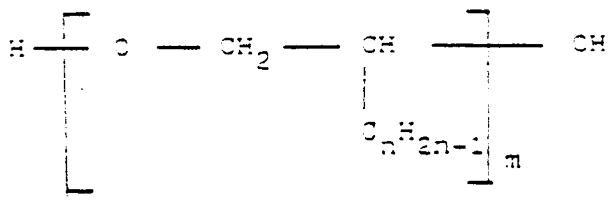

entspricht, in der n = 1 bis 4, vorzugsweise n = 1 und m = 4 bis 35, vorzugsweise m = 5 bis 20 bedeuten.

Für die Komponente A — niedermolekulare, aromatische Gruppen enthaltende Epoxidharze mit einem Epoxidäquivalentgewicht unter 375 — sind Polyepoxide geeignet. Als Polyepoxide können bei der vorliegenden Erfindung Materialien verwendet werden, die zwei oder mehr Epoxidgruppen im Molekül enthalten. Bevorzugt sind Verbindungen mit zwei Epoxidgruppen im Molekül. Die Polyepoxide haben ein relativ niedriges Molekulargewicht von höchstens 750, bevorzugt 400 bis 500. Die Polyepoxide können z. B. Polyglycidylether von Polyphenolen sein, wie Bisphenole, vorteilhaft z. B. Bisphenol A. Man kann diese Polyepoxide durch Veretherung eines Polyphenols mit einem Epihalohydrin in Gegenwart von Alkali herstellen. Beispiele für geeignete Phenolverbindungen sind Bis(4-hydroxyphenyl)-2,2-propan, 4,4'-Dihydroxybenzophenon, Bis(4-hydroxyphenyl)-1,1-ethan, Bis(4-hydroxyphenyl)-1,1-isobutan, Bis(4-hydroxy-tertiär-butylphenyl-2,2-propan, Bis(2-hydroxynaphthylmethan, 1,5-Dihydroxynaphthalin und Hydantoinepoxide.

Eine andere geeignete Klasse von Polyepoxiden sind Polyglycidylether von phenolischen Novolakharzen.

Vorteilhaft können auch Polyglycidylester von aromatischen Polycarbonsäuren verwendet werden.

Als Komponente B werden aliphatische und/oder alizyklische polyfunktionelle Alkohole oder Carbonsäuren mit einem Molekulargewicht unter 350 eingesetzt. Vorteilhaft weisen diese eine verzweigte aliphatische Kette, insbesondere mit mindestens einer Neostruktur, auf.

Geeignete Verbindungen entsprechen der folgenden allgemeinen Formel :

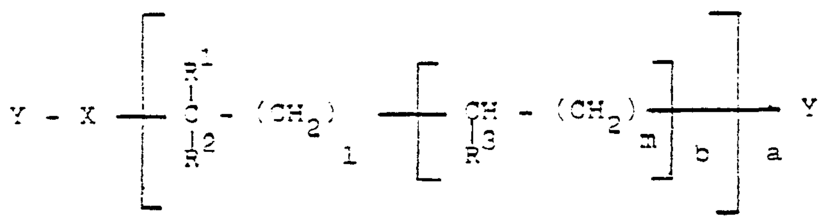

Hierin bedeuten

Y = OH, COOH

X = $(CH_2)_n$

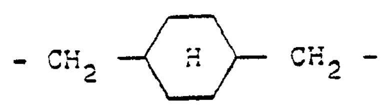

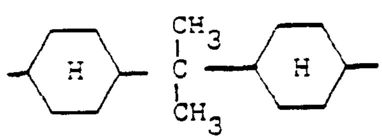

$R^1$, $R^2$, $R^3$ = H, Alkylrest mit 1 bis 5 C-Atomen

a = 0 ; 1

b = 0 ; 1

1 = 0-10

m, n = 1-10

Als Beispiele seien genannt :

Diole, wie Ethylenglykol, Diglykol, Dipropylenglykol, Dibutylenglykol, Triglykol, 1,2-Propandiol, 1,3-Propandiol, 2,2-Dimethyl-1,3-propandiol, 2,2-Diethyl-1,3-propandiol, 2-Methyl-2-ethyl-1,3-propandiol, 2-Methyl-2-propyl-1,3-propandiol, 2-Ethyl-2-butyl-1,3-propandiol, 1,2-Butandiol, 1,4-Butandiol, 2,3-Butandiol, 2-Ethyl-1,4-butandiol, 2,2-Diethyl-1,3-butandiol, Buten-2-diol-1,4, 1,2-Pentandiol, 1,5-Pentandiol, 3-Methyl-1,5-Pentantiol, 1,6-Hexandiol, 2,5-Hexandiol, 2-Ethyl-1,3-hexandiol, 2,5-Dimethyl-2,5-hexandiol, 1,3-Octandiol, 4,5-Nonandiol, 2,10-Decandiol, 2-Hydroxyethyl-hydroxyacetat, 2,2-Dimethyl-3-hydroxypropyl-2,2-dimethylhydroxypropionat, 2-Methyl-2-propyl-3-hydroxypropyl-2-methyl-2-propylhydroxypropionat, 4,4'-Methylenbiscyclohexanol und 4,4'-Isopropylidenbiscyclohexanol.

Einige bevorzugte Diole sind 2,2-Dimethyl-1,3-propandiol, 3-Methyl-1,5-pentandiol, 2,2-Dimethyl-3-hydroxypropyl-2,2-dimethylhydroxypropionat und 4,4'-Isopropylidenbiscyclohexanol.

Als Carbonsäuren für die Komponente B kommen eine Vielzahl von Dicarbonsäuren in Betracht, wie sie in der DE-OS 3 108 073.1-44 beschrieben werden.

Wesentlich ist ees, daß die Verbindungen der Komponente B in einem solchen Verhältnis mit der Komponente A umgesetzt werden, daß das Umsetzungsprodukt den angegebenen Gehalt an aromatischen Gruppen, berechnet als Phenylengruppe, von 10 bis 45 % aufweist.

Das Epoxidharz wird durch die Komponente C kettenverlängert. Ihr Anteil an dem gesamten Bindemittel beträgt 5 bis 40 Gewichts-%, bezogen auf das gesamte Bindemittel. Für die Komponente C geeignete Polyalkylenetherdiole entsprechen der folgenden Formel :

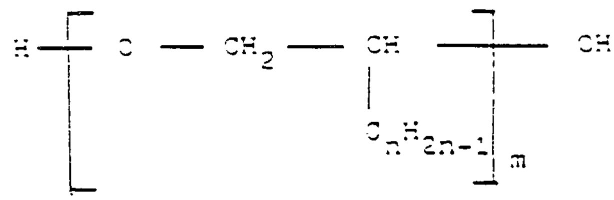

In der Formel bedeuten n = 1 bis 4 und m = 4 bis 35. Ganz besonders bevorzugt werden Polypropylenglykole, bei denen also n den Wert 1 aufweist und bei denen m Werte von 5 bis 20 aufweist.

Das für die Umsetzung mit der Epoxidverbindung als Komponente D verwendete Amin kann primär, sekundär oder tertiär sein, wobei sekundäre Amine sich besonders gut eignen. Primäre und sekundäre Amine können direkt an den Epoxidring angelagert werden, tertiäre nur in Form ihrer Ammoniumsalze oder über eine weitere funktionelle Gruppe im Molekül. Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine wie z. B. Methylethanolamin, Diethanolamin und dergleichen. Ferner sind Dialkylaminoalkylamine wie z. B. Dimethylaminoethylamin, Diethylaminopropylamin und dergleichen geeignet.

In den meisten Fällen werden niedermolekulare Amine verwendet, doch ist es auch möglich, höhermolekulare Amine anzuwenden, insbesondere dann, wenn die Absicht besteht, die Flexibilität des Harzes durch den Einbau solcher Amine zu erhöhen. In ähnlicher Weise kann man auch Mischungen aus niedermolekularen und höhermolekularen Aminen zur Modifizierung der Harzeigenschaften verwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die Umsetzung des Amins mit der epoxygruppenhaltigen Verbindung tritt häufig schon beim Vermischen dieser Materialien ein. Es kann aber gegebenenfalls eine Erwärmung auf mäßig erhöhte Temperaturen wünschenswert sein, z. B. auf 50 bis 150 °C, doch sind Umsetzungen auch bei niedrigeren und höheren Temperaturen möglich. Häufig ist es vorteilhaft, zur Beendigung der Umsetzung die Temperatur gegen das Ende der Reaktion mindestens geringfügig für eine ausreichende Zeit zu erhöhen, um eine vollständige Umsetzung sicherzustellen.

Für die Umsetzung mit der epoxyhaltigen Verbindung sollte mindestens eine solche Menge an Amin verwendet werden, daß das Harz einen kationischen Charakter annimmt, d. h. daß es unter dem Einfluß einer Spannung in dem Beschichtungsbad zu der Kathode wandert, wenn es durch Zugabe einer Säure löslich gemacht worden ist. Es können im wesentlichen alle Epoxygruppen des Harzes mit einem Amin umgesetzt werden. Es ist aber auch möglich, überschüssige Epoxygruppen in dem Harz zu belassen, die bei der Berührung mit Wasser unter Bildung von Hydroxylgruppen hydrolisieren.

Eine weitere Möglichkeit, die erforderliche Wasserdispergierbarkeit zu erzielen, besteht darin, als Komponente D Mannich-Basen, d. h. Umsetzungsprodukte geeigneter, zur Reaktion mit einem Epoxidring geeignete Gruppen tragender Phenole mit Formaldehyd und einem sekundären Amin, zu verwenden. Hierdurch wird das Bindemittel gleichzeitig selbstvernetzbar.

Des weiteren können die Amine über Tscherniac-Einhorn-Michael-Addukte an die Epoxidharze angelagert werden. Diese Addukte werden auf folgendem Syntheseweg hergestellt. Zunächst werden Phenole mit Methylol (meth)acrylamid zum Tscherniac-Einhorn-Zwischenprodukt umgesetzt, danach werden die Doppelbindungen mit Aminen belegt. Die Endprodukte können über die Phenolgruppe mit den Epoxidgruppen des Bindemittels umgesetzt werden.

Anstelle der genannten Amine oder zusammen mit diesen können auch das Salz eines Amins verwendet werden. Als Salz eines Amins kann das Salz eines tertiären Amins verwendet werden. Zur Neutralisation der Amine geeignete Säuren, die bei der Erfindung verwendet werden können, schließen Borsäure oder andere Säuren mit einer größeren Dissoziationskonstante als Borsäure ein, bevorzugt organische Säuren mit einer Dissoziationskonstante von größer als etwa $1 \times 10^{-5}$. Die bevorzugte Säure ist Essigsäure. Beispiele von anderen Säuren sind Ameisensäure, Milchsäure, Propionsäure, Buttersäure, Salzsäure, Phosphorsäure, Schwefelsäure und Kohlensäure.

Der Aminanteil des Amin-Säuresalzes ist ein Amin, das unsubstituiert oder substituiert wie im Falle

des Hydroxylamins sein kann, wobei diese Substituenten die Umsetzung des Amin-Säuresalzes mit dem polyepoxid nicht stören sollen und die Reaktionsmischung nicht gelieren sollen. Bevorzugte Amine sind tertiäre Amine, wie Dimethylethanolamin, Triethylamin, Trimethylamin, Triisopropylamin und dergleichen. Beispiele von anderen geeigneten Aminen sind in der US-PS 3 839 252 in Spalte 5, Zeile 3 bis Spalte 7, Zeile 42 angegeben.

Die Amin-Säuresalzmischung wird durch Umsetzung des Amins mit der Säure in bekannter Weise erhalten. Es können auch Amin-Säuremischungen verwendet, obwohl sie in der Regel unter Bildung des Säuresalzes reagieren.

Die Reaktionstemperatur für die Umsetzung der Amin-Säuresalze mit den Polyepoxiden kann zwischen der niedrigsten Temperatur, bei der die Umsetzung mit einer nennenswerten Geschwindigkeit verläuft, z. B. Raumtemperatur oder in der Regel etwas höher als Raumtemperatur, bis zu einer maximalen Temperatur zwischen etwa 100 und 120 °C variiert werden. Ein Lösungsmittel ist bei der Umsetzung nicht erforderlich, obwohl es häufig zugegeben wird, um die Reaktion besser steuern zu können. Als Lösungsmittel kommen aromatische Kohlenwasserstoffe oder Monoalkyläther von Ethylenglykol in Betracht.

Die speziellen Ausgangsstoffe, Mengenanteile und Reaktionsbedingungen werden in Übereinstimmung mit den gut bekannten Erfahrungen so ausgewählt, daß eine Gelierung des Produktes während der Reaktion vermiedeen wird. So werden z. B. übermäßig aggressive Reaktionsbedingungen nicht verwendet. In ähnlicher Weise werden Ausgangsstoffe mit reaktionsfähigen Substituenten, die sich mit den Epoxyverbindungen umsetzen können, nicht benutzt, da sie die reaktion nachteilig beeinflussen können.

Um unter Verwendung der erfindungsgemäßen Bindemittel hochbeständige Überzüge zu erhalten, ist es vorteilhaft, dem Elektrotauchlack ein Vernetzungsmittel zuzusetzen, das bei erhöhten Temperaturen die Vernetzung des Bindemittels bewirkt, oder das Bindemittel so zu modifizieren, daß es reaktive Gruppen enthält, die bei erhöhten Temperaturen eine Selbstvernetzung bewirken. Ein selbstvernetzendes System kann vorteilhaft dadurch erhalten werden, daß das Bindemittel mit einem teilblockierten Polyisocyanat, das im Durchschnitt eine freie Isocyanatgruppe pro Molekül besitzt und dessen blockierte Isocyanatgruppen bei Raumtemperatur beständig sind und bei erhöhten Temperaturen entblockt werden und mit den durch die Öffnung der Epoxidringe entstandenen Hydroxylgruppen unter Urethanbildung reagieren. Das Bindemittel kann durch den Einsatz der bereits beschriebenen Mannich-Basen als Komponente D selbstvernetzbar sein.

Häufig angewandte Methoden zur Vernetzung von Bindemitteln sind z. B. in folgenden Offenlegungsschriften publiziert : DE-OS 2 057 799, europäische Patentanmeldungen 12 463 und 4 090 und DE-OS 2 752 256.

Wenn Vernetzungsmittel benutzt werden, machen sie in der Regel etwa 5 bis etwa 60 Gewichts-% des Bindemittels aus. Bevorzugt sind etwa 20 bis etwa 40 Gewichts-% des Bindemittels.

Beispiele von geeigneten Aminoplastvernetzungsmitteln sind der Hexamethylether von Hexamethylol melamin, der Triethyltrimethylether von Hexamethylolmelamin, der Hexabutylether von Hexamethylolmelamin und der Hexamethylether von Hexamethylollmelamin und polymere butylierte Melaminformaldehydharze.

Man kann Harnstoff-Aldehydvernetzungsmittel in bekannter Weise herstellen, indem man Harnstoff und einen Aldehyd bis zur Resolstufe umsetzt und das Umsetzungsprodukt mit einem Alkohol unter sauren Bedingungen alkyliert, wobei man ein alkyliertes Harnstoffaldehydharz erhält. Ein Beispiel von einem geeigneten Vernetzungsmittel auf Basis eines Harnstoffaldehydharzes ist ein butyliertes Harnstofformaldehydharz.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Tempaturen, in der Regel im Bereich von etwa 90 bis etwa 300 °C, aber reagiert. Bei der Herstellung der blockierten Polyisocyanate können beliebige, für die Vernetzung geeignete organische Polyisocyanate, verwendet werden.

Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Andere geeignete Blokkierungsmittel sind Hydroxylamine.

Die blockierten Polyisocyanate werden hergestellt, indem man eine ausreichende Menge des Blockierungsmittels mit dem organischen Polyisocyanat umsetzt, so daß keine freien Isocyanatgruppen mehr vorhanden sind. Die Umsetzung zwischen dem organischen Polyisocyanat und dem Blockierungsmittel ist exotherm. Deshalb werden das Polyisocyanat und das Blockierungsmittel bevorzugt bei einer Temperatur, die nicht höher ist als 80 °C, insbesondere niedriger als 50 °C ist, gemischt, um dem exothermen Effekt entgegenzuwirken.

Die Erfindung betrifft auch ein Verfahren zur Herstellung eines Bindemittels für kationische Elektrotauchlacke durch Umsetzung von

A) niedermolekularen, aromatische Gruppen enthaltenden Epoxidharzen mit einem Epoxidäquivalentgewicht unter 375 mit

B) aliphatischen und/oder alizyklischen polyfunktionellen Alkoholen oder Carbonsäuren mit einem zahlenmittleren Molekulargewicht unter 350, weitere Umsetzung des Reaktionsproduktes von (A) und (B) mit

C) einem polyfunktionellen Alkohol mit einem Molekulargewicht über 350 unter Addition an die Epoxidgruppen derart, daß die Umsetzungsprodukte von (A) und (B) einen Anteil an aromatischen Gruppen, berechnet als Phenylengruppe, von 10 bis 45 Gewichts-% enthalten, und weitere Modifizierung des erhaltenen Zwischenprodukts mit

D) primären und/oder sekundären Aminen oder Ammoniumsalzen zur Erzielung der erforderlichen Wasserdispergierbarkeit, dadurch gekennzeichnet, daß als Komponente (C) 5 bis 40 Gewichts-%, bezogen auf die Summe der Komponenten (A), (B), (C) und (D), eines linearen Polyalkylenetherdiols eingesetzt werden, das im Mittel eine endständige primäre und eine endständige sekundäre Hydroxylgruppe pro Molekül aufweist und der allgemeinen Formel

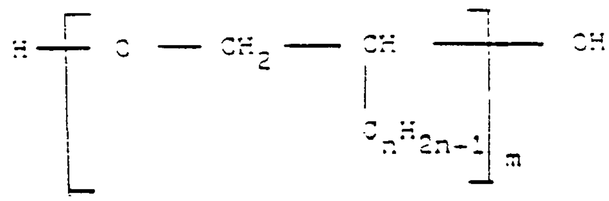

entspricht, in der n = 1 bis 4, vorzugsweise n = 1 und m = 4 bis 35, vorzugsweise m = 5 bis 20 bedeuten.

Das Verfahren wird folgendermaßen durchgeführt: Die Komponente A und die Komponente B werden gemischt und gegebenenfalls unter Hinzugabe von Katalysatoren, wie z. B. tertiären Aminen, bei Temperaturen zwischen 100 und 140 °C, vorzugsweise 115 bis 135 °C, vollständig umgesetzt. Die Umsetzung kann anhand des Epoxidäquivalentgewichtes überprüft werden. Dieses Reaktionsprodukt aus den Komponenten A und B kann gegebenenfalls mit der Komponente C bei Temperaturen zwischen 100 und 140 °C weiter modifiziert werden. Auch diese Umsetzung kann anhand des Epoxidäquivalentgewichtes kontrolliert werden. Das so erhaltene Reaktionsprodukt enthält noch freie Epoxidgruppen.

Für diesen Reaktionsschritt können die gleichen Katalysatoren verwendet werden wie bei der Umsetzung der Komponenten A und B. Das so erhaltene Reaktionsprodukt wird mit der Komponente D bei Temperaturen zwischen 90 und 120 °C umgesetzt, so daß ein Bindemittel entsteht, das basische Aminogruppen enthält. Das basische Reaktionsprodukt kann durch Zugabe von Säuren ganz oder teilweise protonisiert werden und anschließend in Wasser dispergiert werden. Das Vernetzungsmittel kann vor der Dispergierung in Wasser dem Bindemittel zugemischt werden oder je nach Reaktivität während der Herstellung des Bindemittels zugeführt werden. Im Falle von teilblockierten Polyisocyanaten werden diese bei Temperaturen zwischen 80 und 150 °C, vorzugsweise bei Temperaturen zwischen 100 und 130 °C, mit dem Bindemittel umgesetzt. Die erhaltenen Bindemittel stellen stabile, gut handhabbare Dispersionen dar. Gegebenenfalls kann es auch zweckmäßig sein, vor der Dispersionsherstellung die Bindemittel in geeigneten organischen Lösungsmitteln zu lösen. Geeignete Lösungsmittel sind z. B. Glykolether, Ethylglykol, Butylglykol, Ketone, wie Ethyldiethylketon, Methylethylketon, Methylisobutylketon und andere.

Die Erfindung betrifft ferner die Verwendung der Bindemittel für Elektrotauchbäder.

Die Elektrotauchbäder können übliche Pigmente enthalten. Häufig wird den Pigmenten ein Dispergiermittel oder ein oberflächenaktives Mittel zugesetzt. Das Pigment und das gegebenenfalls verwendete oberflächenaktive Mittel werden zusammen in einem Teil des Bindemittels oder allein gemahlen, um eine Paste herzustellen, die mit dem restlichen Bindemittel zur Herstellung der Überzugsmasse verschnitten wird.

In manchen Fällen ist es vorteilhaft, dem Elektrotauchbad ein nicht ionisches Modifizierungsmittel oder Lösungsmittel zuzusetzen, um die Dispergierbarkeit, die Viskosität und/oder die Filmqualität zu verbessern. Beispiele von solchen Materialien sind aliphatische, naphthenische und aromatische Kohlenwasserstoffe oder Mischungen davon; Mono- und Dialkylether von Glykolen, sibirisches Fichtennadelöl und andere Lösungsmittel, die mit dem Harzsystem verträglich sind.

Dem Elektrotauchbad können außerdem noch andere Zusatzstoffe, wie Antioxidantien zugesetzt werden. Beispiele dafür sind ortho-Amylphenol oder Kresol. Die Zugabe solcher Antioxidantien ist dann besonders erwünscht, wenn die Abscheidungsbäder atmosphärischem Sauerstoff bei erhöhten Temperaturen unter Rühren für längere Zeiträume ausgesetzt sind.

Andere Zusätze, die das Bad gegebenenfalls enthalten kann, sind Netzmittel, wie Erdölsulfonate, sulfatierte Fettamine oder ihre Amide, Alkylphenoxypolyethylenalkanole oder Phosphatester, einschließlich von ethoxilierten Alkylphenolphosphaten. Andere Gruppen von möglichen Zusätzen sind Antischaummittel und Suspendiermittel. Für die Formulierung des Abscheidungsbades kann normales Leitungswasser verwendet werden. Da ein derartiges Wasser aber relativ hohe Anteile an Salzen enthält, können dadurch unerwünschte Änderungen bei der elektrischen Abscheidung auftreten. Es wird deshalb im allgemeinen entionisiertes Wasser bevorzugt.

Die vorstehend aufgeführten möglichen Zusätze sind nicht vollständig, da beliebige andere Zusätze, die bei der elektrischen Abscheidung nicht stören, benutzt werden können.

Die Erfindung betrifft weiterhin ein Verfahren zum elektrophoretischen Beschichten eines elektrisch leitenden als Kathode geschalteten Substrats aus einem wässrigen Bad auf Basis mindestens teilweise mit Säuren neutralisierter kationischer Bindemittel, wobei sie erhalten worden sind durch Umsetzung von

A) niedermolekularen, aromatische Gruppen enthaltenden Epoxidharzen mit einem Epoxidäquivalentgewicht unter 375 mit

B) aliphatischen und/oder alizyklischen polyfunktionellen Alkoholen oder Carbonsäuren mit einem zahlenmittleren Molekulargewicht unter 350, weitere Umsetzung des Reaktionsproduktes von (A) und (B) mit

C) einem polyfunktionellen Alkohol mit einem Molekulargewicht über 350 unter Addition an die Epoxidgruppen derart, daß die Umsetzungsprodukte von (A) und (B) einen Anteil an aromatischen Gruppen, berechnet als Phenylengruppe, von 10 bis 45 Gewichts-% enthalten, und weitere Modifizierung des erhaltenen Zwischenprodukts mit

D) primären und/oder sekundären Aminen oder Ammoniumsalzen zur Erzielung der erforderlichen Wasserdispergierbarkeit, wobei die Bindemittel durch Umsetzung selbst vernetzbar gemacht worden sind oder das Bad ein zusätzliches Vernetzungsmittel enthält, dadurch gekennzeichnet, daß zur Herstellung der Bindemittel als Komponente (C) 5 bis 40 Gewichts-%, bezogen auf die Summe der Komponenten (A), (B), (C) und (D), eines linearen Polyalkylenetherdiols eingesetzt worden sind, das im Mittel eine endständige primäre und eine endständige sekundäre Hydroxylgruppe pro Molekül aufweist und der allgemeinen Formel

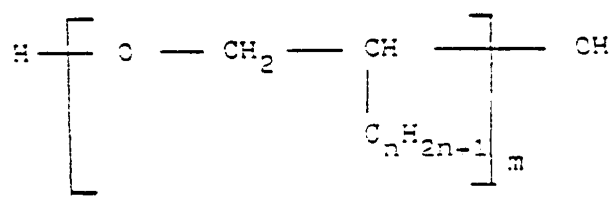

entspricht, in der n = 1 bis 4, vorzugsweise n = 1 und m = 4 bis 35, vorzugsweise m = 5 bis 20 bedeuten.

Als Substrat kann bei der elektrischen Abscheidung ein beliebiges elektrisch leitendes Substrat dienen. Üblicherweise handelt es sich dabei um Metallsubstrate, wie z. B. Eisen, Stahl, Kupfer, Zink, Messing, Zinn, Nickel, Chrom und Aluminium sowie um andere Metalle, vorbehandelte Metalle, ferner phosphatierte oder chromatierte Metalle. Auch imprägniertes Papier und andere leitende Substrate können benutzt werden.

Bei der kationischen Abscheidung werden die zu überziehenden Gegenstände in eine wässrige Dispersion des solubilisierten filmbildenden kationischen Bindemittels eingetaucht. Es wird eine elektrische Spannung zwischen dem zu überziehenden Gegenstand, der als Kathode dient, und einer Anode angelegt und das kationische Bindemittel wird durch den elektrischen Strom auf der Kathode abgeschieden. Der Gegenstand wird dann aus dem Bad entnommen und in der Regel abgespült. Dann wird der Überzug in üblicher Weise durch Erwärmen ausgehärtet.

Die Erfindung wird in den folgenden Beispielen noch näher erläutert. Alle Angaben über Teile und Prozentsätze sind Gewichtsangaben, falls nicht ausdrücklich etwas anderes festgestellt wird.

Darstellung eines Vernetzungsmittels I

Ein Reaktor, der mit einer Heizvorrichtung, einem Kühler, einem Rührer, einem Thermometer, einer Ausgangsleitung, die zu einer Waschvorrichtung führt, und einer Einrichtung zum Einleiten von Stickstoff ausgerüstet wird, wird mit 12 280 Teilen Toluylendiisocyanat (Mischung aus etwa 80 % 2,4-Toluylendiisocyanat und etwa 20 % 2,6-Toluylendiisocyanat) beschickt. Es wird Stickstoff eingeleitet und der Kühler wird eingeschaltet. Im Verlauf vom 5 Stunden werden 5 550,5 Teile 2-Äthylhexanol allmählich zugegeben, wobei die Temperatur allmählich auf 50 °C steigt. Während die Temperatur von 50 °C aufrecht erhalten wird, werden weitere 3 649,5 Teile 2-Äthylhexanol im Verlauf von 4 Stunden zugegeben. Die Reaktionsmischung wird 75 Minuten bei 50 °C gehalten, dann wird der Kühler abgeschaltet und es werden 3,6 Teile Dibutylzinndilaurat zugegeben. Die Heizvorrichtung wird angeschaltet und die Reaktionsmischung wird im Verlauf von 45 Minuten auf 65,6 °C erwärmt. Im Verlauf von zwei Stunden und 50 Minuten werden 3 184 Teile 1,1,1-Trimethylolpropan zugegeben, wobei die Temperatur von 65,6 auf 120 °C steigt. Die Rektionsmischung wird bei dieser Temperatur 90 Minuten gehalten, dann werden 10 560 Teile 2-Ethoxiethanol zugegeben. Das entstandene Produkt ist eine Lösung eines Polyurethanvernetzungsmittels.

Darstellung eines Vernetzungsmittels II

2 340 g Glycidylester der 2-Methyl-2-Ethylheptansäure werden mit 2 073 g Trimellithsäureanhydrid in einem Reaktionsgefäß auf 130 °C erhitzt. Hierbei springt die stark exotherme Reaktion an. Durch externe

Kühlung wird die Reaktion bei 150 °C gehalten, bis eine Säurezahl von 183 erreicht ist. Danach kühlt man auf 90 °C ab und setzt 1 450 g MIBK* zu. Anschließend tropft man 835 g Propylenoxid langsam zu. Bei einer Säurezahl 2 wird die Reaktion abgebrochen. Der Festkörper der Harzlösung wird mit weiterem MIBK* auf 70 % eingestellt.

Darstellung einer grauen Pigmentpaste

Zu 953 Teilen eines handelsüblichen Epoxidharzes auf Basis Bisphenol A mit einem Epoxidäquivalentgewicht von 8 % werden 800 Teile Butylglykol gegeben. Die Mischung wird auf 80 °C erhitzt. In die Harzlösung werden dann 221 Teile eines Umsetzungsproduktes aus 101 Teilen Diethanolamin und 120 Teilen 80 %iger wässriger Milchsäure gegeben. Man führt die Reaktion bei 80 °C durch bis die Säurezahl unter 1 gefallen ist.

1 800 Teile dieses Produkts werden mit 2 447 Teilen entionisiertem Wasser vorgelegt und mit 2 460 Teilen $TiO_2$, 590 Teilen eines Extenders auf Basis Aluminiumsilikat, 135 Teilen Bleisilikat und 37 Teilen Ruß vermengt. Diese mischung wird in einem Mahlaggregat auf eine Hegmann-Feinheit von 5 bis 7 zerkleinert. Danach gibt man 1 255 Teile entionisiertes Wasser zu, um die gewünschte Pastenkonsistenz zu erreichen. Diese graue Paste ist sehr lagerstabil.

Beispiele 1 bis 4

Herstellung der Bindemittel

Die Zusammensetzung der Bindemittel ist in Tabelle 1 aufgeführt, die genauen Einwaagen der Komponenten sind in Tabelle 2 aufgelistet. Die Bindemittel werden nach der gleichen Rezeptur hergestellt.

* MIBK = Methylisobutylketon

Tabelle 1 : Zusammensetzung der Bindemittel

| | Beispiel 1 | Beispiel 2 | Beispiel 3 | Beispiel 4 |
|---|---|---|---|---|
| Komponente B | Methylpropylpropandiol-1,3 | Neopentylglykol | Neopentylglykol | Dimethylmalonsäure |
| Komponente C | Polypropylenglykol OH-Zahl 187,8 | Polypropylenglykol OH-Zahl 187,8 | Polypropylenglykol OH-Zahl 123,5 | Polypropylenglykol OH-Zahl 187,8 |
| Vernetzer | I | I | II | I |
| Verlaufsmittel | Phenylglykol | Phenylglykol | Hexylglykol | Hexylglykol |

(Siehe Tabelle 2 Seite 9 f.)

Tabelle 2 : Einwaagen zur Bindemittelherstellung

| | Beispiel 1 | Beispiel 2 | Beispiel 3 | Beispiel 4 |
|---|---|---|---|---|
| Epoxidharz | 1063,5 | 1087,0 | 967,3 | 1061,6 |
| Komponente B | 186,7 | 150,3 | 133,8 | 186,4 |
| Xylol | 41,9 | 42,7 | 38,0 | 41,7 |
| Katalysator | 4,2 | 4,3 | 3,8 | 4,2 |
| Komponente C (95 % Lsg.) | 444,7 | 454,5 | 615,0 | 444,1 |
| Katalysator | 3,3 | 3,3 | 2,9 | 3,2 |
| Vernetzerlsg. | 1287,4 | 1287,4 | 1287,3 | 1287,4 |
| Ketimin | 100,9 | 103,1 | 93,6 | 104,8 |
| Meola | 83,6 | 85,4 | 76,0 | 83,4 |
| Verlaufsmittel | 218,4 | 218,4 | 218,4 | 218,4 |
| $H_2O$ | 1866,9 | 1866,1 | 1865,6 | 1868,3 |
| Eisessig | 42.3 | 41,4 | 42,1 | 40,4 |
| Emulgator | 66.5 | 66.5 | 66,5 | 66,5 |
| $H_2O$ | 2175,0 | 2175,0 | 2175,0 | 2175,0 |

Tabelle 3 : Epoxidäquivalentgewicht der Zwischenstufen

| Beispiel | 1 | 2 | 3 | 4 |
|---|---|---|---|---|
| Stufe 1 | 420 | 415 | 415 | 420 |
| Stufe 2 | 1130 | 1100 | 1280 | 1140 |

In einem 4 1-Reaktor wird das Epoxidharz auf Basis Bisphenol A (Epoxidäquivalentgewicht 188) mit der Komponenten B und Xylol vorgelegt und auf 125 °C erhitzt. Dann wird Dimethylbenzylamin als Katalysator zugesetzt. Man läßt die Temperatur auf 130 °C ansteigen und führt die Reaktion fort bis das Epoxidäquivalentgewicht die Stufe 1 erreicht hat (Tabelle 3). Danach wird die Komponente C mit 5 Gewichts-% Xylol (bezogen auf die Komponente C) zugesetzt und man fügt die zweite Menge Katalysator zu. Man setzt die Umsetzung bei 130 °C fort bis das Epoxidäquivalent die Stufe 2 (Tabelle 3) erreicht hat. Dann wird die Vernetzerlösung zugegeben und auf 90 °C abgekühlt (Ausnahme Beispiel 3: Hier wird der Vernetzer erst nach Zugabe des Verlaufsmittels zusammen mit 55 g Bleioctoat zugesetzt). Jetzt fügt man das Ketimin (Umsetzungsprodukt aus Diethylentriamin und Methylisobutylketon (70 %ig in methylisobutylketon) und Methylethanolamin zu. Man läßt die reaktionstemperatur auf 120 °C ansteigen und hält die Temperatur 90 Minuten. Dann wird das Verlaufsmittel zugegeben und 15 Minuten untergerührt. Inzwischen bereitet man ein Dispergierbad aus der ersten Wassermenge und Eisessig sowie der Emulgatorlösung vor. Hierin wird die Harzlösung dispergiert. Nach 2 Stunden wird die zweite Menge Wasser sugesetzt und 30 Minuten untergemischt. Der Dispersionsfestkörper beträgt 35,5 %.

Aus den Bindemitteldispersionen werden mit der obenbeschriebenen Pigmentpaste Lackbäder angesetzt. Hierzu werden verwandt

2 000 Teile Wasser
25 Teile 10 %ige Essigsäure
1 920 Teile Dispersion
775 Teile Paste
180 Teile Wasser

Die Abscheidung der Lackfilme erfolgt bei 27 °C während 2 Minuten. Die zinkphosphatierten Bleche werden hierbei als Kathode geschaltet und beschichtet. Die Härtung der abgeschiedenen Filme erfolgt während 20 Minuten bei 185 °C.

Tabelle 4 : Ergebnis der Abscheidungen

| Beispiel | 1 | 2 | 3 | 4 |
|---|---|---|---|---|
| Abscheidespannung V | 250 | 280 | 270 | 290 |
| Filmdicke µm | 47 | 36 | 33 | 31 |
| Gitterschnitt | sehr gut | sehr gut | sehr gut | sehr gut |
| Haftung | sehr gut | sehr gut | sehr gut | sehr gut |
| Biegeprobe | i. O. | i. O. | i. O. | i. O. |
| Verlauf | sehr gut | sehr gut | sehr gut | sehr gut |

**Patentansprüche**

1. Wasserdispergierbares Bindemittel für kationische Elektrotauchlacke, erhalten durch Umsetzung von

A) niedermolekularen, aromatische Gruppen enthaltenden Epoxidharzen mit einem Epoxidäquivalentgewicht unter 375 mit

B) aliphatischen und/oder alizyklischen polyfunktionellen Alkoholen oder Carbonsäuren mit einem zahlenmittleren Molekulargewicht unter 350, weitere Umsetzung des reaktionsproduktes von (A) und (B) mit

C) einem polyfunktionellen Alkohol mit einem Molekulargewicht über 350 unter Addition an die Epoxidgruppen derart, daß die Umsetzungsprodukte von (A) und (B) einen Anteil an aromatischen Gruppen, berechnet als Phenylengruppe, bon 10 bis 45 Gewichts-% enthalten, und weitere Modifizierung des erhaltenen Zwischenprodukts mit

D) primären und/oder sekundären Aminen oder Ammoniumsalzen zur Erzielung der erforderlichen Wasserdispergierbarkeit, dadurch gekennzeichnet, daß als Komponente C) 5 bis 40 Gewichts-%, bezogen auf die Summe der Komponenten (A), (B), (C) und (D), eines linearen Polyalkylenetherdiols eingesetzt worden sind, das im Mittel eine endständige primäre und eine endständige sekundäre Hydroxylgruppe pro Molekül aufweist und der allgeleinen Formel

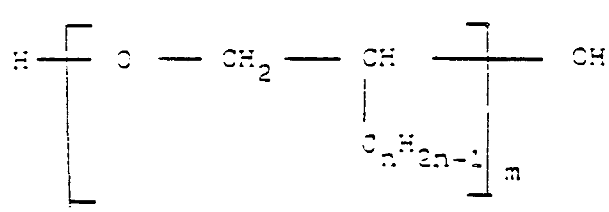

entspricht, in der n = 1 bis 4, vorzugsweise n = 1 und m = 4 bis 35, vorzugsweise m = 5 bis 20 bedeuten.

2. Bindemittel nach Anspruch 1, dadurch gekennzeichnet, daß der Anteil der Komponente (C) 10 bis 30 Gewichts-%, bezogen auf die Summe der Komponenten (A), (B), (C) und (D), beträgt.

3. Bindemittel nach Anspruch 1 oder 2, dadurch gekennzeichnet, daß ein Teil seiner Hydroxylgruppen mit einem partiell blockierten Polyisocyanat umgesetzt worden ist.

4. Bindemittel nach Anspruch 1 bis 3, dadurch gekennzeichnet, daß die Komponenten (A) ein Epoxidharz auf Basis Bisphenol A ist.

5. Bindemittel nach Anspruch 1 bis 4, dadurch gekennzeichnet, daß die Komponente (A) ein Polyglycidylester ist.

6. Bindemittel nach Anspruch 1 bis 5, dadurch gekennzeichnet, daß die Komponente (B) ein Diol oder eine Dicarbonsäure mit einer verzweigten aliphatischen Kette ist.

7. Bindemittel nach Anspruch 1 bis 6, dadurch gekennzeichnet, daß die Komponente (B) ein Diol oder eine Dicarbonsäure mit mindestens einer Neostruktur ist.

8. Verfahren zur Herstellung eines Bindemittels für kationische Elektrotauchlacke durch Umsetzung von

A) niedermolekularen, aromatische Gruppen enthaltenden Epoxidharzen mit einem Epoxidäquivalentgewicht unter 375 mit

B) aliphatischen und/oder alizyklischen polyfunktionellen Alkoholen oder Carbonsäuren mit einem zahlenmittleren Molekulargewicht unter 350, weitere Umsetzung des Reaktionsproduktes von (A) und (B) mit

C) einem polyfunktionellen Alkohol mit einem Molekulargewicht über 350 unter Addition an die Epoxidgruppen derart, daß die Umsetzungsprodukte von (A) und (B) einen Anteil an aromatischen Gruppen, berechnet als Phenylengruppe, von 10 bis 45 Gewichts-% enthalten, und weitere Modifizierung des erhaltenen Zwischenprodukts mit

D) primären und/oder sekundären Aminen oder Ammoniumsalzen zur Erzielung der erforderlichen Wasserdispergierbarkiet, dadurch gekennzeichnet, daß als Komponente C) 5 bis 40 Gewichts-%, bezogen auf die Summe der Komponenten (A), (B), (C) und (D), eines linearen Polyalkylenetherdiols eingesetzt werden, das im Mittel eine endständige primäre und eine endständige sekundäre Hydroxylgruppe pro Molekül aufweist und der allgemeinen Formel

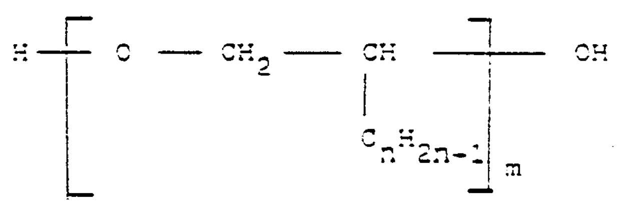

entspricht, in der n = 1 bis 4, vorzugsweise n = 1 und m = 4 bis 35, vorzugsweise m = 5 bis 20 bedeuten.

9. Verwendung der Bindemittel nach Anspruch 1 bis 7 für Elektrotauchbäder.

10. Verfahren zum elektrophoretischen Beschichten eines elektrisch leitenden als Kathode geschalteten Substrats aus einem wässrigen Bad auf Basis mindestens teilweise mit Säuren neutralisierter kationischer Bindemittel, wobei sie erhalten worden sind durch Umsetzung von

A) niedermolekularen, aromatische Gruppen enthaltenden Epoxidharzen mit einem Epoxidäquivalentgewicht unter 375 mit

B) aliphatischen und/oder alizyklischen polyfunktionellen Alkoholen oder Carbonsäuren mit einem zahlenmittleren Molekulargewicht unter 350, weitere Umsetzung des Reaktionsproduktes von (A) und (B) mit

C) einem polyfunktionellen Alkohol mit einem Molekulargewicht über 350 unter Addition an die Epoxidgruppen derart, daß die Umsetzungsprodukte von (A) und (B) einen Anteil an aromatischen Gruppen, berechnet als Phenylengruppe, von 10 bis 45 Gewichts-% enthalten, und weitere Modifizierung des erhaltenen Zwischenprodukts mit

D) primären und/oder sekundären Aminen oder Ammoniumsalzen zur Erzielung der erforderlichen Wasserdispergierbarkiet, wobei die Bindemittel durch Umsetzung selbst vernetzbar gemacht worden sind oder das Bad ein zusätzliches Vernetzungsmittel enthält, dadurch gekennzeichnet, daß zur Herstellung der Bindemittel als Komponente (C) 5 bis 40 Gewichts-%, bezogen auf die Summe der Komponenten (A), (B), (C) und (D), eines linearen Polyalkylenetherdiols eingesetzt worden sind, das im Mittel eine endständige primäre und eine endständige sekundäre Hydroxylgruppe pro Molekül aufweist und der allgemeinen Formel

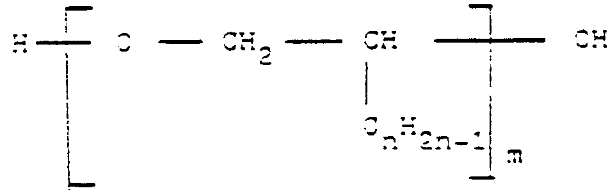

entspricht, in der n = 1 bis 4, vorzugsweise n = 1 und m = 4 bis 35, vorzugsweise m = 5 bis 20 bedeuten.

11. Verfahren nach Anspruch 10, dadurch gekennzeichnet, daß das wässrige Bas als Vernetzungsmittel ein vollständig blockiertes Polyisocyanat enthält.

12. Verfahren nach Anspruch 10, dadurch gekennzeichnet, daß das wässrige Bad als Vernetzungsmittel eine organische Verbindung mit endständigen umesterungsfähigen und/oder amidierungsfähigen Estergruppen enthält, von denen mindestens eine durch Substituenten im Esteralkohol aktiviert ist.

13. Verfahren nach Anspruch 12, dadurch gekennzeichnet, daß das Bad ein Vernetzungsmittel enthält, das Hydroxyalkylestergruppen und/oder Carbalkoxymethylestergruppen enthält.

14. Beschichtetes Substrat, hergestellt durch das Verfahren nach Anspruch 10 bis 13.

## Claims

1. A water-dispersible binder for cationic electrocoating finishes, obtained by reaction of

A) epoxy resins containing low molecular weight aromatic groups and having an epoxide equivalent weight of less than 375 with

B) aliphatic and/or alicyclic polyfunctional alcohols or carboxylic acids having a number average molecular weight of less than 350, further reaction of the product of (A) and (B) with

C) a polyfunctional alcohol having a molecular weight of more than 350, addition at the epoxide groups taking place so that the reaction products of (A) and (B) contain an amount of aromatic groups of from 10 to 45 % by weight, calculated as phenylene groups, and further modification of the resulting intermediate with

D) primary and/or secondary amines or ammonium salts in order to achieve the required water-dispersibility, wherein, as component (C), 5 to 40 % by weight, based on the sum of components (A), (B), (C) and (D), of a linear polyalkylene ether diol are employed which has on average one terminal primary and one terminal secondary hydroxyl group per molecule and corresponds to the general formula

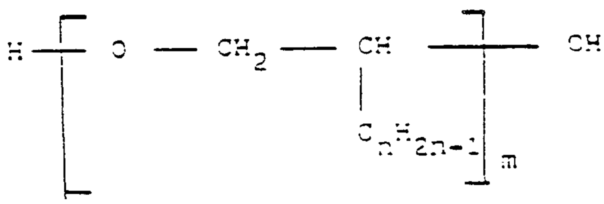

in which n (sic) denotes 1 to 4, preferably 1, and m denotes 4 to 35, preferably 5 to 20.

2. A binder as claimed in claim 1, wherein the proportion of component (C) is 10 to 30 % by weight, based on the sum of components (A), (B), (C) and (D).

3. A binder as claimed in claim 1 or 2, wherein some of the hydroxyl groups have been reacted with a partially blocked isocyanate.

4. A binder as claimed in claims 1 to 3, wherein component (A) is an epoxy resin based on bisphenol A.

5. A binder as claimed in claims 1 to 4, wherein component (A) is a polyglycidyl ester.

6. A binder as claimed in claims 1 to 5, wherein component (B) is a diol or a dicarboxylic acid having a branched aliphatic chain.

7. A binder as claimed in claims 1 to 6, wherein component (B) is a diol or a dicarboxylic acid having at least one neo structure.

8. A process for the preparation of a binder for cationic eletrocoating finishes by reaction of

A) epoxy resins containing low molecular weight aromatic groups and having an epoxide equivalent weight of less than 375 with

B) aliphatic and/or alicyclic polyfunctional alcohols or carboxylic acids having a number average molecular weight of less than 350, further reaction of the product of (A) and (B) with

C) a polyfunctional alcohol having a molecular weight of more than 350, addition at the epoxide groups taking place so that the reaction products of (A) and (B) contain an amount of aromatic groups of from 10 to 45 % by weight, calculated as phenylene groups, and further modification of the resulting intermediate with

D) primary and/or secondary amines or ammonium salts in order to achieve the required water-dispersibility, wherein, as component (C), 5 to 40 % by weight, based on the sum components (A), (B), (C) and (D), of a linear polyalkylene ether diol are employed which has on average one terminal primary and one terminal secondary hydroxyl group per molecule and corresponds to the general formula

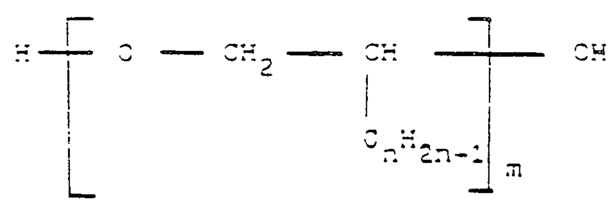

in which n (sic) denotes 1 to 4, preferably 1, and m denotes 4 to 35, preferably 5 to 20.

9. Use of the binder as claimed in claims 1 to 7 for electrocoating baths.

10. A process for the electrophoretic coating of an electrically conductive substrate connected as the

cathode, from an aqueous bath based on cationic binders which are at least partially neutralized with acids, the binders being obtained by reaction of

A) epoxy resins containing low molecular weight aromatic groups and having an epoxide equivalent weight of less than 375 with

B) aliphatic and/or alicyclic polyfunctional alcohols or carboxylic acids having a number average molecular weight of less than 350, further reaction of the product of (A) and (B) with

C) a polyfunctional alcohol having a molecular weight of more than 350, addition at the epoxide groups taking place so that the reaction products of (A) and (B) contain an amount of aromatic groups of from 10 to 45 % by weight, calculated as phenylene groups, and further modification of the resulting intermediate with

D) primary and/or secondary amines or ammonium salts in order to achieve the required water-dispersibility, and the binders being rendered self-crosslinkable as a result of reaction, or the bath containing an additional crosslinking agent, wherein, as component (C), for the preparation of the binder, 5 to 40 % by weight based on the sum of components (A), (B), (C) and (D), of a linear polyalkylene ether diol are employed which has on average one terminal primary and one terminal secondary hydroxyl group per molecule and corresponds to the general formula

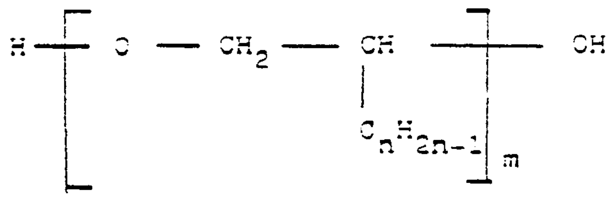

in which n (sic) denotes 1 to 4, preferably 1, and m denotes 4 to 35, preferably 5 to 20.

11. A process as claimed in claim 10, wherein the aqueous bath contains a completely blocked polyisocynate as the crosslinking agent.

12. A process as claimed in claim 10, wherein the aqueous bath contains, as the crosslinking agent, an organic compound having terminal ester groups capable of transesterification and/or amidation, of which at least one is activated by substituents in the ester alcohol.

13. A process as claimed in claim 12, wherein the bath contains a crosslinking agent which contains hydroxyalkyl ester groups and/or carbalkoxymethyl ester groups.

14. A coated substrate produced by the process as claimed in claims 10 to 13.

**Revendications**

1. Liant dispersible dans l'eau pour peintures d'électrophorèse cationiques, obtenu par réaction :

A) de résines d'époxyde à bas poids moléculaire contenant des groupes aromatiques, ayant un poids équivalent époxyde inférieur à 375, avec

B) des alcools ou acides carboxyliques polyfonctionnels aliphatiques et/ou alicycliques ayant un poids moléculaire moyen en nombre inférieur à 350, et réaction supplémentaire du produit de réaction de (A) et (B) avec

C) un alcool polyfonctionnel ayant un poids moléculaire supérieur à 350, avec addition sur les groupes époxyde, de telle sorte que les produits de réaction de (A) et (B) contiennent une proportion de groupes aromatiques, calculée en groupe phénylène, de 10 à 45 % en poids, avec modification supplémentaire du produit intermédiaire obtenu par

D) des amines ou sels d'ammonium et/ou secondaires pour obtenir la dispersibilité nécessaire dans l'eau, caractérisé par le fait que comme constituant (C), on a utilisé 5 à 40 % en poids, relativement au total des constituants (A), (B), (C) et (D), d'un polyoxyalkylènediol qui présente en moyenne un groupe hydroxyle primaire terminal et un groupe hydroxyle secondaire terminal par molécule et répond à la formule générale :

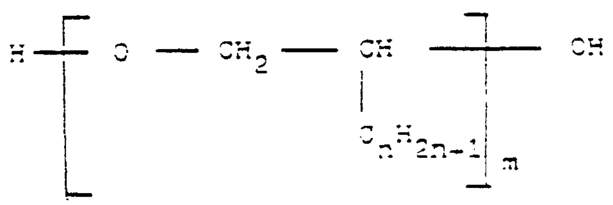

dans laquelle n = 1 à 4, de préférence n = 1, et m = 4 à 35, de préférence m = 5 à 20.

2. Liant selon la revendication 1, caractérisé par le fait que la proportion du constituant (C) est de 10 à 30 % en poids sur le total des constituants (A), (B), (C), (D).

3. Liant selon l'une des revendications 1 et 2, caractérisé par le fait qu'une partie de ses groupes hydroxyle a été mise à réagir avec un polyisocyanate partiellement bloqué.

4. Liant selon les revendications 1 à 3, caractérisé par le fait que le constituant (A) est une résine d'époxyde à base de bisphénol A.

5. Liant selon les revendications 1 à 4, caractérisé par le fait que le constituant (A) est un ester de polyglycidyle.

6. Liant selon les revendications 1 à 5, caractérisé par le fait que le constituant (B) est un diol ou un acide dicarboxylique ayant une chaîne aliphatique ramifiée.

7. Liant selon les revendications 1 à 6, caractérisé par le fait que le constituant (B) est un diol ou un acide dicarboxylique ayant au moins une structure « néo ».

8. Procédé de préparation d'un liant pour peintures d'électrophorèse cationiques par réaction :

A) de résines d'époxyde à bas poids moléculaire contenant des groupes aromatiques, ayant un poids équivalent époxyde inférieur à 375, avec

B) des alcools ou acides carboxyliques fonctionnels aliphatiques et/ou alicycliques ayant un poids moléculaire moyen en nombre inférieur à 350, et réaction supplémentaire du produit de réaction (A) et (B) avec

C) un alcool polyfonctionnel ayant un poids moléculaire supérieur à 350, avec addition sur les groupes époxyde, de telle sorte que les produits de réaction de (A) et (B) contiennent une proportion de groupes aromatiques, calculée en groupe phénylène, de 10 à 45 % en poids, avec modification supplémentaire du produit intermédiaire obtenu par

D) des amines ou sels d'ammonium primaires et/ou secondaires pour obtenir la dispersibilité nécessaire dans l'eau, caractérisé par le fait que comme constituant (C), on utilise 5 à 40 % en poids, relativement au total des constituants (A), (B), (C) et (D), d'un polyoxyalkylène-diol qui présente en moyenne un groupe hydroxyle secondaire terminal par molécule et répond à la formule générale :

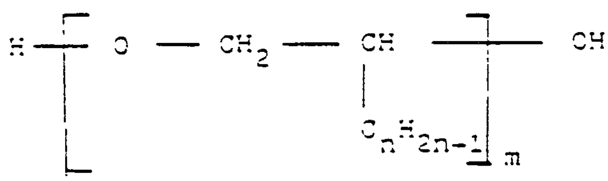

dans laquelle n = 1 à 4, de préférence n = 1, et m = 4 à 35, de préférence m = 5 à 20.

9. Utilisation des liants selon les revendications 1 à 7, pour des bains d'électrophorèse.

10. Procédé pour le revêtement électrophorétique d'un subjectile conducteur de l'électricité, branché comme cathode, depuis un bain aqueux à base de liants cationiques neutralisés au moins partiellement par des acides, ceux-ci ayant été obtenus par réaction.

A) de résines d'époxyde à bas poids moléculaire contenant des groupes aromatiques, ayant un poids équivalent époxyde inférieur à 375, avec

B) des alcools ou acides carboxyliques polyfonctionnels aliphatiques et/ou alicycliques ayant un poids moléculaire moyen en nombre inférieur à 350, et réaction supplémentaire du produit de réaction de (A) et (B) avec

C) un alcool polyfonctionnel ayant un poids moléculaire supérieur à 350, avec addition sur les groupes époxyde de telle sorte que les produits de réaction de (A) et (B) contiennent une proportion de groupes aromatiques, calculée en groupe phényle, de 10 à 45 % en poids, avec modification supplémentaire du produit intermédiaire obtenu par

D) des amines ou sels d'ammonium primaires et/ou secondaires pour obtenir la dispersibilité nécessaire dans l'eau, les liants ayant été rendus eux-mêmes réticulables par réaction ou le bain contenant un agent de réticulation supplémentaire, caractérisé par le fait que, pour la préparation du liant, on a utilisé comme constituant (C) 5 à 40 % en poids, relativement au total des constituants (A), (B), (C) et (D), d'un polyoxyalkylènediol qui présente en moyenne un groupe hydroxyle primaire terminal et un groupe hydroxyle secondaire terminal par molécule et répond à la formule générale :

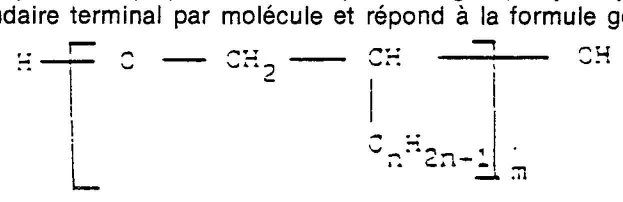

dans laquelle n = 1 à 4, de préférence n = 1, m = 4 à 35, de préférence M = 5 à 20.

11. Procédé selon la revendication 10, caractérisé par le fait que le bain aqueux contient comme agent de réticulation un polyisocyanate complètement bloqué.

12. Procédé selon la revendication 10, caractérisé par le fait que le bain aqueux contient comme agent de réticulation un composé organique à groupes ester terminaux susceptibles de transestérification et/ou d'amidification, dont au moins un est activé par des substituants dans l'alcool de l'ester.

13. Procédé selon la revendication 12, caractérisé par le fait que le bain contient un agent de réticulation qui contient des groupes ester d'hydroxyalkyle et/ou des groupes ester de carbalcoxyméthyle.

14. Subjectile revêtu, fabriqué par le procédé selon l'une des revendications 10 à 13.